# EUROPEAN PATENT APPLICATION

(11) **EP 2 489 500 A1**
(43) Date of publication of application: **22.08.2012**
(21) Application number: 12155840.7
(22) Date of filing: 16.02.2012
(51) Int. Cl.: B29D 30/48

(54) **Tire building apparatus**

(30) Priority: 18.02.2011 JP 2011033705
(71) Applicant: Bridgestone Corporation, Tokyo 104-8340 (JP)
(72) Inventor: Honma, Takuya, Kodaira-shi, Tokyo 187-8531 (JP)
(74) Representative: Oxley, Robin John George

(57) **Abstract**

A tire building apparatus (1) forms a preset bead by winding and laminating a ribbon-shaped bead filler rubber (Fr) on the radially outer side of a bead core (B) for two or more laps. The apparatus includes: a bead core-supporting ring (2) extending along a circumferential direction and supporting the bead core (B) on a radially outer surface of the ring (2); a lamination plate (3) raised from one axial end of the ring (2) and having a side surface on which the bead filler rubber (Fr) is laminated; a winding device (4) for winding the bead filler rubber (Fr) on the side face of the lamination plate (3); and a bead core-positioning device (5) for axially positioning the bead core (B) on the ring (2). The device (5) has a swing plate (10) swinging around an axis (Z) parallel to a tangential direction of the ring (2).

## Description

### TECHNICAL FIELD

The present invention relates to a tire building apparatus that forms a preset bead by winding and laminating a ribbon-shaped bead filler rubber on a radially outer side of a bead core for two or more laps.

### RELATED ART

Conventionally, there has been used a method of forming a bead filler on the radially outer side of a bead core in which a bead filler rubber extruded from an extruder is cut into a predetermined length; the cut bead filler rubber is wound on a cylindrical shaping drum; the cut surfaces of the bead filler rubber are joined with each other; the bead filler is joined with a bead core while the bead filler is raised into a vertical position with a bladder or other mechanisms to assemble the bead core and the bead filler rubber in a separate manner. However, with this method, depending on the cross sectional shaped of the bead core, there occur variation in the contacting area (area of the joining section) with respect to the bead core, and variation in thickness of the joining portion at the time when the bead filler rubber is annularly wound and the cutting surfaces are joined with each other.

To address the problems described above, JP 2005-111786 A discloses a method of producing a tire in which a bead filler is assembled to a bead core to form a preset bead, and the preset bead is disposed on a carcass band, in other words, the preset bead is formed by winding and laminating a ribbon-shaped bead filler rubber on the radially outer side of the bead core for two or more laps. With this technique, it is possible to form a bead filler having a shape approximate to a product tire, thereby reducing the above-described variations.

### DISCLOSURE OF THE INVENTION

### PROBLEMS TO BE SOLVED BY THE INVENTION

However, with the method as described in JP 2005-111786 A, there is a problem in terms of production although improvement can be achieved in terms of quality. More specifically, in the method in which the ribbon-shaped bead filler rubber is wound and laminated for multiple times, there are steps of: first laminating a predetermined amount of ribbon-shaped bead filler rubber on a lamination plate as a rear surface side of a bead core in the bead filler; setting a bead core, for example, having a hexagonal shape in cross section; laminating the ribbon-shaped bead filler rubber on the upper side (on the radially outer side) of the bead core; and optionally disposing other types of rubbers on the laminated ribbon-shaped bead filler rubber. Each of the above-described steps also requires a time for transferring the device of winding the ribbon-shaped bead filler rubbers, which results in the large amount of time to complete all the steps. Further, even in a standby state between the steps, the extruder continuously extrudes a rubber in order to prevent the heat generation, and hence, the large amount of the rubber material is required as compared with the bead filler to be actually formed.

The present invention aims to solve the problems described above, and its object is to provide a tire building apparatus capable of reducing the production time and the consumption of the material rubber, by continuously performing a step of laminating a predetermined amount of a ribbon-shaped bead filler rubber on a lamination plate as a portion of a bead filler rubber on the rear surface side of a bead core, and a step of laminating the ribbon-shaped bead filler rubber on the upper side of the bead core (on the radially outer side).

### MEANS FOR SOLVING THE PROBLEM

The present invention has been made to solve the problems described above, and a tire building apparatus according to the present invention forms a preset bead by winding and laminating a ribbon-shaped bead filler rubber on a radially outer side of a bead core for two or more laps, the device comprising: a bead core-supporting ring extending along a circumferential direction and supporting the bead core on a radially outer surface of the bead core-supporting ring; a lamination plate raised from one end of the bead core-supporting ring in an axial direction and having a side surface on which the ribbon-shaped bead filler rubber is laminated; a winding device for winding the ribbon-shaped bead filler rubber on a side face of the lamination plate; and a bead core-positioning device for positioning the bead core on the bead core-supporting ring in the axial direction, in which the bead core-positioning device has a swing plate provided so as to be able to swing around an axis parallel to a tangential direction of the bead core-supporting ring.

In the tire building apparatus, the bead core is firstly disposed in a standby position located on the outer circumference of the bead core-supporting ring and outside a trajectory of the winding device for winging the ribbon-shaped bead filler rubber. Then, the ribbon-shaped bead filler rubber is wound and laminated so as to make one or plural layers on the side surface of the lamination plate as a portion of the bead filler on the rear surface side (on the lamination plate side) of the bead core. At the time when the lamination reaches a predetermined position in the radial direction, the swing plate is allowed to swing on the lamination plate side. This moves the bead core from the standby position to the lamination plate side, and attaches it to the bead filler rubber having been laminated to the lamination plate. Next, the swing plate is returned to the original standby position, and the winding device continues to wind the ribbon-shaped bead filler rubber, whereby the bead filler rubber is wound and laminated on the upper portion of the bead core. After completion of the forming of the bead filler, the swing plate is inclined on the side opposite to the lamination plate, whereby the preset bead is detached from the lamination plate.

Thus, according to the tire building apparatus, the bead core is placed above a bead supporting ring on standby; the predetermined amount of ribbon-shaped bead filler rubber is laminated on the lamination plate as the portion of the bead filler on the rear surface side of the bead core; then the bead core is installed; and thereafter the ribbon-shaped bead filler rubber can be laminated on the upper portion of the bead core (radially outer side). This makes it possible to continuously wind the ribbon-shaped bead filler rubber without obstructing the movement of the winding device, so that the production time can be reduced and the consumption of the material rubber can be reduced.

It should be noted that, in the tire building apparatus according to the present invention, it is preferable that the bead core-supporting ring has, on the circumference thereof, at least one gap portion or recessed portion formed by recessing the radially outer surface of the bead core-supporting ring radially inward, and the swing plate is disposed within the gap portion or recessed portion.

Further, in the tire building apparatus according to the present invention, it is preferable that: the bead core-supporting ring has wall surfaces opposite to each other with the gap portion or recessed portion being therebetween, the wall surfaces each having a V-shaped groove extending from the radially inner side toward the radially outer side in a bifurcated manner; the bead core-positioning device has a pin extending between the wall surfaces and having ends each guided by the V-shaped groove, and a driving device for moving the pin along the V-shaped groove; and the swing plate has an elongated hole passing therethrough along the axis, and is swingably supported by the pin inserted in the elongated hole.

Further, in the tire building apparatus according to the present invention, it is preferable that the bead core-positioning device has a motor having a motor shaft extending along the axis and located between the wall surfaces of the bead core-supporting ring opposite to each other with the gap portion or recessed portion of the bead core-supporting ring being therebetween, and the swing plate is attached integrally to the shaft of the motor in a rotatable manner.

According to the present invention, it is possible to provide a tire building apparatus capable of reducing the production time and the consumption of material rubber at the time of forming the preset bead.

### BRIEF DESCRIPTION OF THE DRAWINGS

FIG. 1(a) is a side view of a tire building apparatus according to an embodiment of the present invention, and FIG. 1(b) is a front view of the tire building apparatus according to the embodiment of the present invention.
FIG. 2 is a cross sectional view taken along the line A-A in FIG. 1(b).
FIG. 3(a) through FIG. 3(c) are schematic sectional views each taken along line A-A in FIG. 1(b), illustrating operations of a swing plate in a sequential manner.
FIG. 4(a) through FIG. 4(c) are schematic sectional views each taken along line A-A in FIG. 1(b), sequentially illustrating a method for forming a preset bead using the tire building apparatus illustrated in FIG. 1.
FIG. 5 is a sectional view illustrating a bead core-positioning device used in another embodiment of the tire building apparatus of the present invention at the same positions as those illustrated in FIG. 3(a) through FIG. 3(c).

### BEST MODE FOR CARRYING OUT THE INVENTION

Hereinbelow, the present invention will be described in detail with reference to the embodiment illustrated in the drawings. In the drawings, the reference character 1 represents a tire building apparatus according to an embodiment of the present invention, the reference character B represents a bead core having a hexagonal shape in cross section, the reference character Fr represents a ribbon-shaped bead filler rubber wound and laminated on the outer circumference of the bead core B, and the reference character F represents a bead filler formed on the outer circumference of the bead core B.

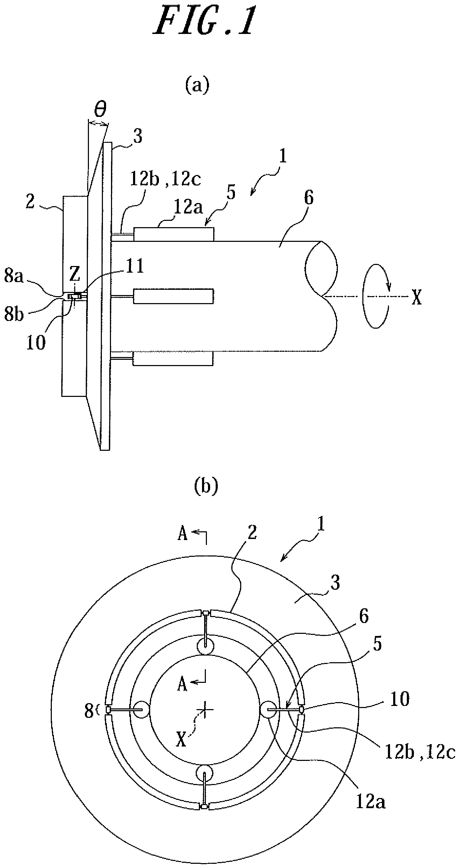

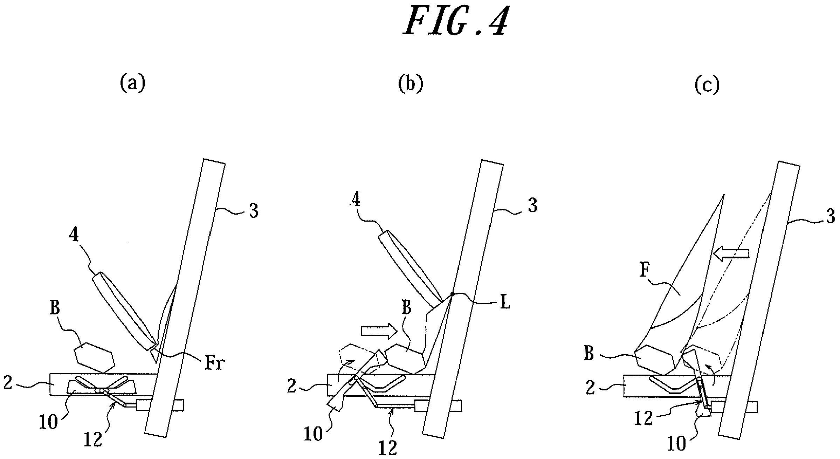

The tire building apparatus 1 forms a preset bead by winding and laminating the ribbon-shaped bead filler rubber Fr on the outer circumferential surface (surface on the radially outer side) of the bead core B for two or more laps. As illustrated in FIG. 1, the tire building apparatus 1 has: a bead core-supporting ring 2 extending along the circumferential direction and supporting the bead core B on the surface on the radially outer side thereof; a lamination plate 3 raised from one end of the bead core-supporting ring 2 in the axial direction X and having a side surface on which the ribbon-shaped bead filler rubber Fr is wound and laminated; a roller-shaped winding device 4 (see FIG. 4) for winding the ribbon-shaped bead filler rubber Fr extruded from an extruder (not illustrated) on the side surface of the lamination plate 3; and a bead core-positioning device 5 for positioning the bead core B on the bead core-supporting ring 2 in the axial direction X.

Further, the device 1 for manufacturing a tire includes a rotating device 6 for integrally rotating and driving the bead core-supporting ring 2 and the lamination plate 3.

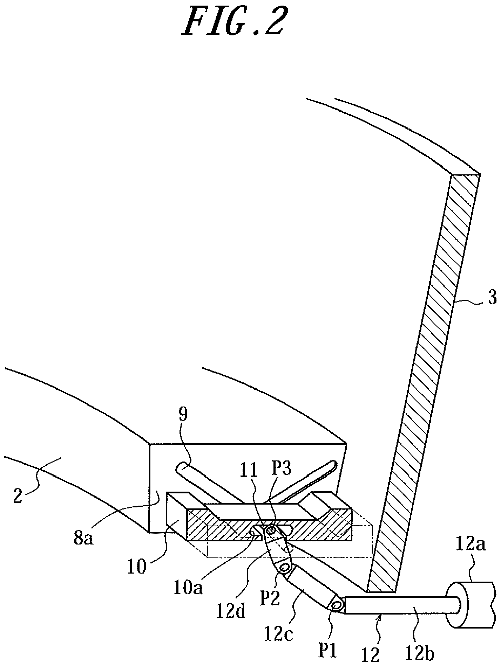

The bead core-supporting ring 2 has, on a circumference thereof, one or more gap portions 8 (four gap portions in this embodiment) disposed at equal intervals. Further, as illustrated in FIG. 2, the bead core-supporting ring 2 has wall surfaces 8a and 8b opposite to each other in the circumferential direction with the gap portion 8 being therebetween, and the wall surfaces 8a and 8b each has a V-shaped groove 9 extending from the inner side toward the radially outer side in a bifurcated manner. Note that, in place of the gap portion 8, it may be possible to employ a recessed portion recessed from the radially outer side toward the radially inner side.

The bead core-positioning device 5 includes a swing plate 10 having a shape that substantially corresponds to an outer shape of the bead core B and provided in a manner that can be swung around an axis Z parallel to a tangential direction of the bead core-supporting ring 2. One swing plate 10 is provided for each of the gap portions 8. The swing plate 10 has an elongated hole 10a passing through the swing plate 10 along the axis Z. Further, the bead core-positioning device 5 extends between the wall surfaces 8a and 8b of the bead core-supporting ring 2, and includes a pin 11 having ends engaged with and guided by the V-shaped groove 9, and a driving device 12 for moving the pin 11 along the V-shaped groove 9. The pin 11 is inserted into the elongated hole 10a of the swing plate 10 in a manner that can move in the right and left directions (axial direction X). The driving device 12 includes a pneumatic or oil-hydraulic cylinder 12a fixed on the circumferential surface of the rotating device 6, a rod 12b that moves forward and backward with the cylinder 12a, a first arm 12c linked with the rod 12b through a pivotal axis P1 in a swingable manner, and a second arm 12d linked with the first arm 12c through a pivotal axis P2 in a swingable manner. The top end of the second arm 12d is linked with the pin 11 (pivotal axis P3) in a swingable manner. Note that a not-illustrated stopper mechanism limits swinging angles of the pivotal axes P1 to P3 to be a predetermined angle, so that forward/backward displacement from the rod 12b is converted and transferred to the movement of the pin 11 along the V-shaped groove 9.

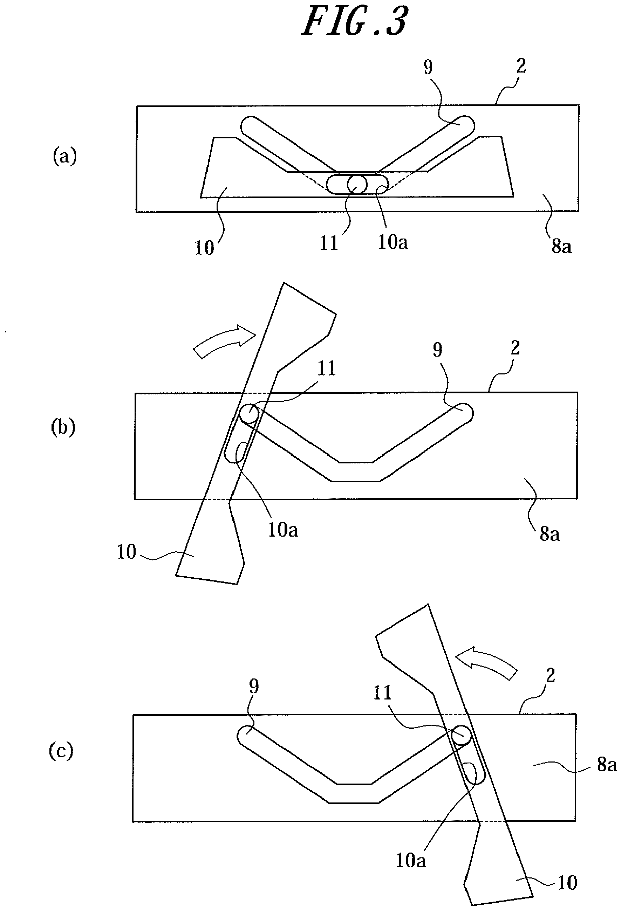

Next, operations of the swing plate 10 will be described. As illustrated in FIG. 3(a), at a reference position where the cylinder 12a is not driven, the pin 11 is positioned at the center of the V-shaped groove 9, and in this state, the swing plate 10 is located in a horizontal position and on the radially inner side than the outer circumference surface of the bead core-supporting ring 2. Then, as illustrated in FIG. 3(b), by driving the cylinder 12a to protrude the rod 12b, the pin 11 moves backward (toward the other end side of the axis X and in the direction away from the lamination plate 3) along the V-shaped groove 9. At this time, as the pin 11 moves backward (to the left side) in the elongated hole 10a of the swing plate 10, the swing plate 10 rotates clockwise (rotates on the lamination plate 3 side) around the pin 11 by the reaction and its own weight. On the contrary, as illustrated in FIG. 3(c), by driving the cylinder 12a to retract the rod 12b, the pin 11 moves frontward (toward the one end side of the axis X and in the direction close to the lamination plate 3) along the V-shaped groove 9. At this time, as the pin 11 moves frontward (to the right side) in the elongated hole 10a of the swing plate 10, the swing plate 10 rotates counterclockwise (rotates so as to be away from the lamination plate 3) around the pin I 1 by the reaction and its own weight.

Next, a method for forming the preset bead using the device 1 for manufacturing a tire will be described.

First, as illustrated in FIG. 4(a), the bead core B is placed at a standby position located on the outer circumference of the bead core-supporting ring 2 and outside a trajectory of winding device 4 for winding the ribbon-shaped bead filler rubber Fr. Then, one or more layers of the ribbon-shaped bead filler rubber Fr are wound and laminated on the side surface of the lamination plate 3 as a portion of the bead filler F located on the rear surface side (on the lamination plate 3 side) of the bead core B. At the time when this lamination reaches a predetermined position L in the radial direction, the swing plate 10 is swung toward the lamination plate 3 side, by driving the cylinder 12a to protrude the rod 12b as illustrated in FIG. 4(b). With this operation, the bead core B is moved from the standby position to the lamination plate 3 side, whereby the bead core B adheres to the bead filler rubber Fr laminated on the lamination plate 3 in advance. Then, by driving the cylinder 12a to retract the rod 12b by almost a half stroke, the swing plate 10 is returned to the original standby position (not illustrated), and the winding device 4 continues to wind the ribbon-shaped bead filler rubber Fr, whereby the bead filler rubber Fr is wound and laminated on the upper portion of the bead core B. Next, after completion of forming of the bead filler F, by driving the cylinder 12a to fully retract the rod 12b as illustrated in FIG. 4(c), the swing plate 10 is made inclined to a side opposite to the lamination plate 3 side, whereby the preset bead is detached from the lamination plate 3. After the preset bead is detached from the lamination plate 3, the swing plate 10 is returned to the original standby position.

As described above, according to the tire building apparatus 1, the bead core B is placed on the bead core-supporting ring 2 on standby; the predetermined amount of the ribbon-shaped bead filler rubber Fr is laminated on the lamination plate 3 as the portion of the bead filler F on the rear surface side of the bead core B; then the bead core B is installed; and thereafter the ribbon-shaped bead filler rubber Fr can be laminated on the upper portion of the bead core B (radially outer side). This makes it possible to continuously wind the ribbon-shaped bead filler rubber Fr without obstructing the movement of the winding device 4, so that the production time and the consumption of the material rubber can be reduced.

Further, according to the tire building apparatus 1, the swing plate 10 is disposed within the gap portion 8 of the bead core-supporting ring 2. This makes the standby position of the swing plate 10 located on the radially inner side than the innermost diameter of the bead core B, whereby it is possible to reliably prevent the swing plate 10 from obstructing the winding of the ribbon-shaped bead filler rubber Fr with the winding device 4.

Yet further, according to the tire building apparatus 1, the pin 11 extending between the wall surfaces 8a and 8b of the bead core-supporting ring 2 and having both ends guided by the V-shaped groove 9, and the driving device 12 for moving the pin 11 along the V-shaped groove 9 are provided as the bead core-positioning device 5. The swing plate 10 is configured to have the elongated hole 10a passing therethrough along the axis Z, and to be swingably supported by the pin 11 inserted in the elongated hole 10a. This makes it possible to reliably swing the swing plate, in other words, install the bead core B to the lamination plate 3 and detach the preset bead from the lamination plate 3 with a simple structure.

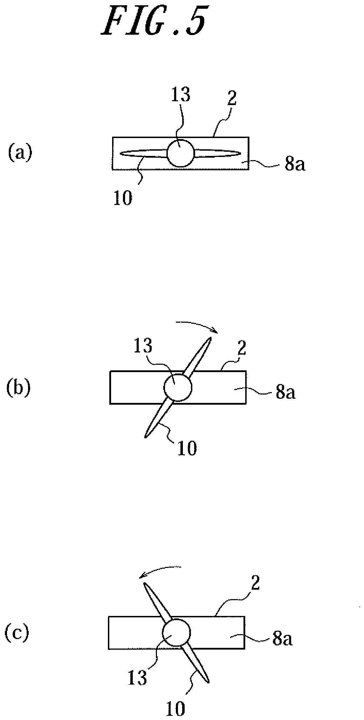

The present invention has been described on the basis of the examples illustrated in the drawings. However, the present invention is not limited to the above-described examples. The present invention can be modified as appropriate within the matters described in the attached claims. For example, as illustrated in FIG. 5, it may be possible to employ a configuration in which the bead core-positioning device has a motor having a shaft 13 extending long the axis Z and located between the wall surfaces 8a and 8b opposite to each other with the gap portion 8 of the bead core-supporting ring 2 being therebetween, and a blade-like swing plate 10' is attached integrally to the motor shaft 13 in a rotatable manner. With this configuration, it is possible to reduce the number of parts while reducing the weight of the device.

### INDUSTRIAL APPLICABILITY

As described above, according to the present invention, it is possible to provide a tire building apparatus capable of achieving the reduction in the number of producing steps and reduction in the material rubber at the time of forming the preset bead.

### EXPLANATION OF REFERENCE CHARACTERS

1 Tire building apparatus
2 Bead core-supporting ring
3 Lamination plate
4 Winding device
5 Bead core-positioning device
6 Rotating device
8 Gap portion
8a, 8b Wall surface
9 V-shaped groove
10, 10' Swing plate
10a Elongated hole
11 Pin
12 Driving device
12a Cylinder
12b Rod
12c First arm
12d Second arm
13 Motor shaft

## Claims

1. A tire building apparatus, which forms a preset bead by winding and laminating a ribbon-shaped bead filler rubber on a radially outer side of a bead core for two or more laps, comprising:
a bead core-supporting ring extending along a circumferential direction and supporting the bead core on a radially outer surface of the bead core-supporting ring;
a lamination plate raised from one end of the bead core-supporting ring in an axial direction and having a side surface on which the ribbon-shaped bead filler rubber is laminated;
a winding device for winding the ribbon-shaped bead filler rubber on a side face of the lamination plate; and
a bead core-positioning device for positioning the bead core on the bead core-supporting ring in the axial direction, wherein
the bead core-positioning device has a swing plate provided so as to be able to swing around an axis parallel to a tangential direction of the bead core-supporting ring.

2. The tire building apparatus according to claim 1, wherein
the bead core-supporting ring has, on the circumference thereof, at least one gap portion or recessed portion formed by recessing a radially outer surface of the bead core-supporting ring radially inward, and
the swing plate is disposed in the gap portion or recessed portion.

3. The tire building apparatus according to claim 2, wherein
the bead core-supporting ring has wall surfaces opposite to each other with the gap portion or recessed portion being therebetween, said wall surfaces each having a V-shaped groove extending from the radially inner side toward the radially outer side in a bifurcated manner,
the bead core-positioning device has a pin extending between the wall surfaces and having ends each guided by the V-shaped groove, and a driving device for moving the pin along the V-shaped groove, and
the swing plate has an elongated hole passing therethrough along the axis, and is swingably supported by the pin inserted in the elongated hole.

4. The tire building apparatus according to claim 2, wherein
the bead core-positioning device has a motor having a shaft extending along the axis between the wall surfaces of the bead core-supporting ring, said wall surfaces being opposite to each other with the gap portion or recessed portion of the bead core-supporting ring being therebetween, and
the swing plate is attached integrally to the shaft of the motor in a rotatable manner.
